# EUROPÄISCHE PATENTSCHRIFT

(11) **EP 1 657 577 B1**
(45) Veröffentlichungstag und Bekanntmachung des Hinweises auf die Patenterteilung: **06.05.2009**
(21) Anmeldenummer: 05090292.3
(22) Anmeldetag: 24.10.2005
(51) Int. Cl.: G02B 7/02, B23Q 1/00

(54) **Rotationslager zur hochgenauen Winkelpositionierung eines Gegenstandes**
Rotating bearing for high precision angular positioning of an object
Support pivotant permettant un réglage de haute précision de la position angulaire d'un objet

(30) Priorität: 24.10.2004 DE 102004052154
(43) Veröffentlichungstag der Anmeldung: 17.05.2006
(73) Patentinhaber: Helmholtz-Zentrum Berlin für Materialien und Energie GmbH, 14109 Berlin (DE)
(72) Erfinder: Noll, Tino, 12524 Berlin (DE); Lammert, Heiner, 15831 Mahlow (DE)
(74) Vertreter: Rudolph, Margit

(56) Entgegenhaltungen:
- EP-A- 0 665 389
- DE-A1- 4 300 026
- DE-A1- 19 905 779
- US-A1- 2004 189 969

## Beschreibung

Die Erfindung bezieht sich auf ein Rotationslager zur hochgenau einstellbaren Winkelposition eines Gegenstandes mit einem Halteelement zur Halterung des Gegenstandes und einem ortfesten Sockelelement, das über mehrere am Umfang gleichmäßig verteilte, jeweils an beiden Enden Festkörpergelenke als elastisch deformierbare Verformungszonen aufweisende schräge Stützkoppeln mit dem Halteelement fest verbunden ist, und mit einem Stellantrieb zur Einstellung der Winkelposition.

### Stand der Technik

Für Positionieraufgaben im Genauigkeitsbereich unterhalb eines Mikrometers scheiden Konstruktionen aus, die auf Wälz- oder Gleitlagern beruhen, oder auf kinematischen Aufstellungen, wie Kugel auf einer Planfläche, einem Konus, einer oder drei V-Nuten, kardanischen Gelenken oder gestapelten Einzelachsführungen, basieren. Die Formfehler der abwälzenden und gleitenden Körper und die Bewegungswiderstände durch Reibung führen zu unvermeidlichen Stellabweichungen oberhalb der einzuhaltenden Genauigkeit. Eine parallelkinematische Führung, beispielsweise Hexapode oder kartesisches Sechsstablager, ermöglicht es, in allen sechs kartesischen Raumrichtungen unabhängige Bewegungen zu führen und zu justieren. Für viele Anwendungen sind jedoch nicht drei translatorische und drei rotatorische Bewegungen des Gegenstandes erforderlich. Für die hochgenaue Winkelpositionierung eines optischen Spiegels in einem Strahlengang beispielsweise reichen die drei rotatorischen Freiheitsgrade für die orthogonal zur Spiegeloberfläche liegenden drei kartesischen Achsen in der Regel aus. Oft werden auch nur die zwei Kippungen in der Ebene des Spiegels benötigt, das Drehen um die vertikale Achse kann entfallen, wenn sie keine Einstellungsveränderungen für den Strahlengang erbringt. Das Drehen ist jedoch dann von Interesse, wenn die Reflexion von der Oberflächenstruktur des Spiegels abhängig ist. Wichtig für die Einstellung der Winkelposition eines Spiegels ist dessen Drehung um seinen Reflexionspol. Hierbei handelt es sich um den optischen Mittelpunkt in der Spiegeloberfläche, also den Teil der Oberfläche, der den Mittelstrahl des Lichtes reflektiert. In speziellen Fällen, wie z.B. in einem Autokorrelator, kann dieser Punkt auch am Rand der Spiegeloberfläche liegen. Eine Drehung um den Reflexionspol ist erforderlich, damit keine translatorischen Anteile auftreten und der Spiegel bei der Drehung nicht aus dem einfallenden Lichtstrahl herausgefahren wird. Bei nicht spiegelnden Oberflächen kann dieser Punkt als "Rotationspol" oder "Drehzentrum" bezeichnet werden, wobei er auch an einer beliebigen Sollstelle festgelegt werden kann. In den nachfolgenden Ausführungen ist daher der gewählte Begriff "Reflexionspol" in analoger Weise auf den "Rotationspol" bei nicht spiegelnden Gegenständen zu übertragen.

Aus der US 2003/0223103 A1 ist eine mikromechanische Vorrichtung zu Spiegelverstellung bekannt, die mit elektrostatisch angetriebenen Torsionsstäben arbeitet. Die Lagerung weist zwei rotatorische Freiheitsgrade (Kippen) auf und arbeitet spiel-, reibungs- und hysteresefrei. Der mögliche Kipphub wird nur durch die Stablänge bestimmt. Die Einstellung ist relativ einfach, da direkt um den Mittelpunkt der sich schneidenden Achsen (Reflexionspol) gekippt wird. Die Anordnung stellt jedoch eine Reihenschaltung von zwei Drehführungen ähnlich einer Kreuzgelenkanordnung dar und ist somit nicht statisch parallel. In der US 6.318.871 B1 wird eine Verstelleinrichtung für einen Spiegel beschrieben, bei der der Spiegel an in zwei Achsen ausgerichteten Torsionsstäben aufgehängt ist. Die Verstellung erfolgt ebenfalls durch elektrostatische Kräfte. Die Funktionen und auch der sequenzielle Aufbau sind ähnlich der zuvor genannten Vorrichtung, jedoch in einem größeren Maßstab. Beide Vorrichtungen erlauben aber nur zwei Kippungen des Spiegels, eine Rotation um die Spiegelnormale kann nicht ausgeführt werden. Die Stäbe sind hier nicht Zug-Druckstäbe, sondern Torsionsverbindungen. Sie liegen in derselben oder in parallelen Ebenen und definieren die translatorische Position der Spiegeloberfläche entlang seiner Spiegelnormalen nicht exakt.

Aus der DE 199 05 779 A1 ist ebenfalls eine Vorrichtung zum hochgenauen Kippen eines Gegenstandes um wenigstens eine Achse, insbesondere eines optischen Elementes bekannt, von der die vorliegende Erfindung als nächstliegendem Stand der Technik ausgeht. Das aus dieser Druckschrift bekannte Rotationslager, das vornehmlich auch eine Deformationsentkopplung des Gegenstandes von seiner Fassung bewirken soll, besteht aus einem Innenring als Halteelement zur Halterung des Gegenstandes und einem Außenring als ortsfestem Sockelelement. Zwischen dem Innenring und dem Außenring sind vier gleichmäßig am Umfang verteilte Stützkoppeln angeordnet. Dabei sind diese über Festkörpergelenke an jedem Ende fest mit den Ringen verbunden. Die Stützkoppeln haben keinen gemeinsamen Schnittpunkt in ihren Wirkungslinien, sondern definieren die beiden möglichen Kippachsen für den Gegenstand, wobei durch die Lage des Schnittpunktes der beiden Kippachsen durchaus ein Lateralversatz beim Kippen auftreten kann. Die Ausrichtung der Stützkoppeln von radial bis tangential bestimmt somit die Lage der Kippachsen. Die Entfernung der Kippachsen vom Reflexionspol und vom Innenring bestimmt die Steifheit der Vorrichtung. Auf jeder der beiden Achsen ist zwischen Innen- und Außenring noch eine verschiebbare Stellkoppel als Stellantrieb zur Einstellung der Winkelpositionierung angeordnet, die jeweils das Drehmoment um die andere Achse abstützt. Eine hochgenaue Drehung ist auch bei dieser bekannten Vorrichtung nicht durchführbar. Weiterhin kann ein Lateralversatz bei den Kippungen nur verhindert werden, wenn die Stützkoppeln radial ausgerichtet sind. In dieser Positionierung ist aber die Steifigkeit der Vorrichtung sehr gering. Diese ist aber für die hochgenaue Positionierung von besonderer Bedeutung und nimmt nur zu, wenn die Stützkoppeln schräger angeordnet werden, wodurch aber wiederum ein größerer Lateralversatz auftritt.

Aus der DE 100 29 306 C2 ist eine Anordnung zur Mikropositionierung von optischen Komponenten bekannt, bei der zwischen zwei zueinander beabstandeten Platten oder Ringen mehrere beabstandete Festkörpergelenke angeordnet sind. Die Festköpergelenke können in bolzenartige Verbindungsmittel einer Führungseinheit integriert sein oder diese umfassen. Die Führungseinheit mit Platten, Bolzen und/oder Festkörpergelenken kann sowohl durch Fügen mehrerer Einzelkomponenten als auch monolithisch, d.h. einstückig ausgebildet sein. Den Festkörpergelenken sind direkt Piezoaktoren benachbart, über die auf die Ringe oder Platten Verstell- bzw. Positionierkräfte einwirken können. Die bekannte Anordnung dient der temperaturkompensierten, mehrdimensionalen (translatorisch und rotatorisch in alle drei Raumrichtungen) Mikropositionierung von zwei zueinander lagedefinierten Spiegeln. Die Festkörpergelenke verlaufen in ihren Wirkungslinien parallel und ermöglichen daher keine ausschließliche Rotation eines Spiegels in seinem Reflexionspol. Von der Grundaufgabe her soll diese bekannte Anordnung vielmehr zwei Spiegel zueinander exakt ausrichten. Aus der US 5.626.312 ist eine ähnliche Anordnung bekannt, die jedoch ausschließlich der Verdrehung von zwei Elementen zueinander dient. Aus der DE 197 42 205 A1 ist eine Mikropositioniereinrichtung großer Steifigkeit bekannt, die zwei Translationen und eine Rotation durch eine Anordnung von alternierend passiven und aktiven Stäben und Festkörpergelenken zwischen dem Halteelement und dem Sockelelement ermöglicht. Dabei haben die aktiven Stäbe (Aktoren) unterschiedliche Schnittpunkte zur Erzeugung der Bewegungen. Damit ist gewährleistet, dass bei gleichartiger Translation beider Schnittpunkte rein translatorische Stellbewegungen vollführt werden. Sind die Translationen ungleichartig, so wird weiterhin eine Rotation um die Flächennormale der Bewegungsebene überlagert. Weiterhin ist aus der EP 0 665 389 A1 eine Lagerung für ein um mindestens eine Achse bewegliches Bauteil bekannt, bei dem die Festkörpergelenke einen gemeinsamen Schnittpunkt haben. Zur Erzeugung hoher Kippfrequenzen ("Taumelspiegel") sind jedoch jeweils zwei Gelenke mit dem Halteelement und zwei Gelenke mit dem Sockelelement verbunden, sodass sich eine Reihenschaltung der Gelenke ergibt. Aus der DE 1 213 141 A ist ebenfalls eine Vorrichtung für einen Taumelspiegel bekannt, der aber an Fäden aufgehängt ist. Die schrägen Stützkoppeln tragen hier lediglich zur Bildung eines Haltegestells für den Taumelspiegel bei.

Ferner ist aus der US 4 973 145 ein konzentrischer Biegemechanismus nach der Art einer Feder bekannt, mit dem beispielsweise Räder, auch nach der Art eines kardanischen Gelenks, aber auch Antennen oder Spiegel elastisch gelagert werden können. Dabei sollen translatorische Bewegungen in der Horizontalebene vermieden werden, eine vertikale Translationsbewegung bei Torsion des Biegemechanismus in der Horizontalebene ist jedoch zugelassen. Der Biegemechanismus weist ebenfalls ein Halteelement und ein Sockelelement auf, zwischen denen geneigte Stützkoppeln in gleichmäßiger Verteilung am kreisförmigen Umfang so angeordnet sind, dass sie sich in einem gemeinsamen Konvergenzpunkt oberhalb des Halteelements schneiden. Die biegsamen Stützkoppeln können beispielsweise aus Draht aus rostfreiem Stahl bestehen und können durch Kugel- und Zylindergelenke mit dem Halteelement und dem Sockelelement verbunden sein. Derartige mit Haft- und Gleitreibung - und mit Montagespiel behaftete Gelenke können aber nicht hochgenau in Winkelauslenkungen positioniert werden. Durch die auftretende Haftreibung ist eine ruckfreie Verstellung durch den vorgesehenen magnetischen oder piezoelektrischen Antrieb nicht möglich. Festkörpergelenke weist der bekannte Biegemechanismus nicht auf. Die Stützkoppeln können zwar durch Schweißen mit dem Halteelement und dem Sockelelement stoffschlüssig verbunden sein, dadurch ergeben sich aber biegesteife Übergänge, die nicht als elastisch deformierbare Verformungszonen im Sinne von Festkörpergelenken arbeiten können. Bei dieser Ausführungsform kann eine Biegung ausschließlich durch eine Verbiegung der Stützkoppeln an sich erreicht werden, welche ebenfalls nicht hochgenau und reproduzierbar definiert werden kann. Insgesamt ist der bekannte Biegemechanismus aufgrund seiner vorgesehenen Anwendungsgebiete relativ schwer und massiv aufgebaut. Durch die Vielzahl der einzelnen Komponenten ist er sehr komplex, kostenintensiv und wartungsanfällig.

### Aufgabenstellung

Ausgehend von der weiter oben gewürdigten DE 199 05 779 A1 ist die Aufgabe für ein gattungsgemäßes Rotationslager zur hochgenau einstellbaren Winkelposition eines Gegenstandes der zuvor erläuterten Art daher darin zu sehen, dieses so weiterzubilden, dass zum einen auch eine Drehung um die dritte kartesische Achse (um die Oberflächennormale) möglich ist, wobei dabei kein Transversal- und Lateralversatz auftreten und trotzdem eine große Steifheit des Rotationslagers gewährleistet sein soll. Die Lösung für diese Aufgabe besteht erfindungsgemäß darin, dass das Halteelement, die Festkörpergelenke, die Stützkoppeln und das Sockelelement einen translatorisch steifen, gemeinsamen Lagerkorb bilden, wobei die Stützkoppeln als speichenartige Korbstreben mit hoher axialer Biegesteifigkeit ausgebildet und benachbart dreidimensional sternförmig angeordnet sind und sich die Wirkungslinien aller Korbstreben im ortsfesten Rotationspol des Gegenstandes schneiden. Vorteilhafte Weiterbildungen sind den einzelnen Unteransprüchen zu entnehmen und werden im Folgenden im Zusammenhang mit der Erfindung näher erläutert.

Das erfindungsgemäße Rotationslager weist im Wesentlichen einen Korb aus einer Vielzahl von Korbstreben auf, die alle auf einen Punkt, den Reflexionspunkt des zu positionierenden Gegenstandes, ausgerichtet sind. Es erlaubt genau drei Rotationen um die kartesischen Achsen im Reflexionspol, lässt aber - abgesehen von sehr geringen, berechenbaren und reproduzierbaren so genannten "Parasitärverschiebungen" - keine Translation - auch nicht vertikal - zu. Somit ist gewährleistet, dass der zu verdrehende Gegenstand nicht seinen Reflexionsmittelpunkt und damit beispielsweise einen optischen Strahlengang verlässt oder die Weglänge eines Strahlenganges verändert. Der Aufbau des beanspruchten Rotationslagers ist sehr kompakt. Die wesentlichen Elemente, Halteelement, Sockelelement und Stützkoppeln, sind grundsätzlich stoff- oder kraftschlüssig miteinander verbunden. Fehler, da reibungsbehaftete drehbare Gelenke treten nicht auf. Die Drehungen erfolgen ohne Spiel, Reibung und Hysterese ausschließlich über die Festkörpergelenke. Dadurch ist die Reproduziergenauigkeit der Bewegungen extrem hoch. Die axiale bzw. translatorische Steifigkeit des Rotationslagers ist ebenfalls sehr hoch und hochgradig statisch parallel, der Platzbedarf und die Masse sind sehr gering, der Herstellungsaufwand ist ebenfalls sehr gering. Die Festkörpergelenke an beiden Enden der Korbstreben wirken als elastisch deformierbare Verformungszonen, die für dreiachsige Anwendungen Biegungen (Kippungen) in zwei orthogonalen Richtungen und Drehung zulassen (elastische Kugelgelenke für Meridional-, Sagittal- und Azimutaldrehungen).

Wesentliches Merkmal des Rotationslagers nach der Erfindung ist der von Relativbewegungen freie Lagerkorb, der bei höchster translatorischer Steifigkeit trotzdem einen leichte und dabei sehr kompakte Lagerbauart ermöglicht. Die Wirkungslinien der Stäbe liegen vorwiegend nicht in einer oder in parallelen Ebenen. Dabei kann der Lagerkorb unterschiedliche Formen aufweisen, eine Anpassung an den jeweiligen Anwendungsfall und die Ausprägung des zu lagernden Gegenstandes ist möglich. Die Herstellung ist relativ einfach, da keine hohen Genauigkeitsgrenzen eingehalten werden müssen. Vorteilhaft ist es, wenn der Lagerkorb rund oder rechteckig ausgebildet ist. Bei einer runden Ausführungsform erinnert das Rotationslager nach der Erfindung in seinem Erscheinungsbild mit seinen in der Regel dicht benachbart am Umfang verteilten Korbstreben an einen Federball. Dabei zeigen alle Korbstreben auf den Rotations- bzw. Reflexionspol des Gegenstandes. Weiterhin können auch Lücken zwischen den Korbstreben, beispielsweise durch Wegfall von zwei oder drei benachbarten Korbstreben, vorgesehen sein. Eine runde Ausbildung zeigt größte Symmetrie und damit homogene Belastbarkeit. Eine derart symmetrische Ausbildung ist insbesondere auch zum Tragen symmetrischer Gegenstände, beispielsweise eines runden Spiegels, gut geeignet. Einfacher herzustellen ist dagegen eine rechteckige Ausbildung. Auch bei einer solchen Ausbildung kann ohne weiteres eine Ausrichtung aller Korbstreben auf den Rotationspunkt des Gegenstandes erfolgen. In den Eckbereichen treten zwar Inhomogenitäten auf, dafür ist eine rechteckige Ausbildung des Lagerkorbes gut geeignete, rechteckig Gegenstände, beispielsweise einen länglichen Spiegelblock, zu lagern.

Große Vielfalt besteht auch bei der Materialausführung des Lagerkorbes. Auch hier besteht wieder die Möglichkeit der Anpassung an den jeweiligen Anwendungsfall, wobei auch eine Optimierung im Hinblick auf die Herstellungskosten sinnvoll ist. Insbesondere kann der Lagerkorb aus einer Metalllegierung, einem Faserverbundmaterial oder einem Kunststoff bestehen. Für einen Einsatz des Rotationslagers im Ultrahochvakuum (UHV) eigenen sich beispielsweise Aluminium, Titan, Berylliumbronze oder auch verschiedene Edelstähle. Auch die Faserverbundmaterialien, insbesondere mit Kohlenstofffasern, und auch Kunststoffe sind für diese Anwendung gut geeignet, wenn die Umgebungsbedingungen und weiteren Anwendungsparameter, beispielsweise Gewicht des zu lagernden Gegenstandes, dies zulassen. Je nach Materialwahl ergibt sich auch eine andere Herstellungsart für den Lagerkorb. Neben dem konventionellen Zusammenbau aus mehreren Einzelteilen kann er beispielsweise auch einstückig ausgebildet sein. Dazu kann aus einem Metallblech oder einer steifen Kunststofffolie die Kontur per Laser herausgeschnitten und dann in die räumliche Form überführt werden. Die Stoßstelle kann durch Schweißen oder Kleben verschlossen werden oder je nach Steifigkeit des ausgewählten Materials auch offen bleiben. Weiterhin kann der Lagerkorb auch direkt beispielsweise aus einem entsprechenden Aluminiumrohling herausgefräst oder erodiert werden. Relativ einfach wird der Aufbau des Lagerkorbes, wenn dieser zumindest abschnittsweise einstückig ausgebildet ist und die Festkörpergelenke von Einschnürungen in den Korbstreben gebildet sind. Somit kann ein runder Lagerkorb aus einem Stück zusammengebogen oder ein rechteckiger Lagerkorb beispielsweise aus zwei langen und zwei kurzen Seiten zusammengesetzt werden.

Bei der Herausarbeitung des Lagerkorbes oder Seiten davon bietet es sich an, direkt beim Schneidevorgang die Korbstreben in ihrem Anschluss zum Halte- bzw. zum Sockelelement, in ihrem Querschnitt oder nur in ihrer Breite einzuschnüren, sodass sich eine geringere Biegefestigkeit ergibt und flexible Festkörperlager, die aber immer noch über eine ausreichende Steifigkeit verfügen, gebildet werden. Bei einem mehrstückigen Aufbau können aber auch die Korbstreben von Stahlseilen gebildet sein, die jeweils als Festkörpergelenke mit dem Halteelement und dem Sockelelement verbunden sind und in ihrem mittleren Bereich eine starre Rohrhülse als Stützkoppel aufweisen. Die Festkörpergelenke können somit auch aus Stahlseilsegmenten aufgebaut sein. Diese werden in Rohrhülsen gequetscht (crimpen), die dann als Stäbe fungieren. Die Stahlseilsegmente können in das Halte- und das Sockelelement eingeklebt oder eingeklemmt werden. Stahlseilsegmente haben den Vorteil, dass sie Schwingungen gut bedämpfen. Des Weiteren zeigen sie eine größere elastische Verformbarkeit als monolithische Materialien und sind auch im UHV-Bereich sehr gut einsetzbar. Die Lebensdauer von Stahlseilsegmenten ist höhere als die von monolithischem Material und ein Ermüdungsbruch kündigt sich durch das Ausfasern, also Brechen von Einzelfasern rechtzeitig an. Spiralfedern liegen in ihren Eigenschaften zwischen monolithischem Material und Stahlseilsegmenten, sind kommerziell einfach erhältlich und gut verarbeitbar.

Die Verstellung des Rotationslagers nach der Erfindung kann im Rahmen des Stellantriebes über entsprechende Stellelemente von Hand oder motorisch erfolgen. Magnetische oder elektrostatische Direktantriebe des Halteelementes sind ebenso denkbar. Die mechanischen Antriebe sind so angeordnet, dass für jede Rotationsbewegung ein Antrieb vorgesehen ist, der an einem Hebelarm (Ausleger) wirkt. Die Hebelarme werden vorzugsweise orthogonal so angeordnet, dass eine günstige Entkopplung der einzelnen Rotationsachsen erfolgt. Im UHV ist eine Fernbedienung der mechanischen Stellelemente per Seilzug möglich. Grundsätzlich können zwei Konzepte unterschieden werden. Zum einen können zwei Stellelemente zum Kippen des Gegenstandes an einem zentralen Stab angreifen, der kongruent mit der Längsachse des Lagerkorbes mit der Unterseite des Halteelements fest verbunden und in einem Punkt gelagert ist, ein drittes Stellelement kann zur Azimutaldrehung des Gegenstandes an einem mit dem Halteelement fest verbundenen Ausleger angreifen. Dabei kann der zentrale Stab über ein zum Rand des Halteelements aufspringendes Mehrfachbein mit dem Halteelement fest verbunden sein. Bei dieser Ausführungsform erfolgt der Antrieb für die beiden Kippbewegungen aus dem Inneren des Lagerkorbes, wodurch sich eine sehr kompakte Konstruktion ergibt. Der zentrale Stab wird von zwei Stellelementen ausgelenkt und überträgt diese Auslenkung über seine Lagerung auf das Halteelement des Rotationslagers. Diese wird entsprechend gekippt, der Lagerkorb wird entsprechend verformt. Die möglichen Auslenkungen liegen dabei im Millimeterbereich. Wird auf die Azimutaldrehung verzichtet, entfällt der Ausleger, sodass der Antrieb für die beiden Kippbewegungen ausschließlich über das Korbinnere erfolgen kann.

Zum anderen können drei Stellelemente zum Kippen und zum Drehen des Gegenstandes an drei in einer Ebene jeweils einen rechten Winkel zueinander einschließenden und mit dem Halteelement fest verbundenen Auslegern in den kartesischen Richtungen angreifen. Ein geeigneter Ausleger kann beispielsweise T-Form aufweisen und mit dem Halteelement zentral fest verbunden sein. Durch die erzeugten hohen Drehmomente ist eine hochpräzise Einstellung aller drei Rotationen mit dieser Ausführungsform besonders einfach möglich. Auch bei dieser Ausführungsform kann ein Ausleger entfallen, wenn eine Azimutaldrehung nicht erforderlich ist. Um diese sicher zu verhindern, kann kongruent mit der Vertikalachse des Lagerkorbes in dessen Innerem ein Faltenbalg zur Vermeidung der vertikalen Drehung des Lagerkorbes angeordnet sein. Das Stellelement zur Drehung um den Azimut entfällt dann entsprechend. Der Faltenbalg verhindert zwar eine Drehung um die Mittelachse, die beiden Kippbewegungen lässt er jedoch ohne weiteres zu. Durch den Faltenbalg ergibt sich eine weitere Erhöhung der Steifigkeit des Rotationslagers und damit eine weitere Verbesserung der Einstellgenauigkeit im Mikrometerbereich.

Eine weitere Erhöhung der Steifigkeit kann auch dadurch erreicht werden, dass mehrere gleich geformte Lagerkörbe übereinander angeordnet sind, wobei sich Wirkungslinien aller Korbstreben im ortsfesten Rotationspol des Gegenstandes schneiden. Durch die hochgradige Parallelität können sehr hohe Steifigkeiten und damit Stellgenauigkeiten erreicht werden. Durch die korbartige Bauform des Lagerkorbes ist eine Ineinanderschachtelung mehrerer gleich geformter Lagerkörbe, die jede Form, beispielsweise rund oder eckig, aufweisen können, ohne Weiters möglich. Eine Verbindung der einzelnen Lagerkörbe untereinander darf nicht erfolgen, diese können lediglich gemeinsam am Halte- bzw. am Sockelelement befestigt werden. Weitere Details zu dieser Ausführungsform und auch zu den zuvor genannten, auf die sich die Erfindung jedoch nicht beschränkt, sind dem nachfolgenden speziellen Beschreibungsteil zu entnehmen. Gleiches gilt für die durchgehende Darstellung der Korbstreben als Doppelgelenkstäbe mit je einem Festkörpergelenk an ihren Enden. Möglich sind auch Ausführungsformen, bei denen die Korbstreben weitere Festkörpergelenke über ihren Verlauf aufweisen, um eine zusätzliche Biegsamkeit erzeugen zu können.

Die hohe translatorische Steifigkeit des Rotationslagers nach der Erfindung, insbesondere unter Anwendung der zuvor beschriebenen mehrfach konzentrischen Anordnungen, erlaubt es, mit Hilfe von Differenz-Federgetrieben die Justiergenauigkeit weiterhin zu steigern. Dazu wird zwischen das Stellelement und den Ausleger eine Feder gesetzt, die die Wegänderung des Stellelements in eine Kraftänderung wandelt. Durch die Steifigkeit der Feder kann die Kraftänderung pro Wegeinheit und damit das Übersetzungsverhältnis des Differenzfedergetriebes eingestellt werden. Da in den meisten Anwendungsfällen hohe Eigenfrequenzen der Aufstellung angestrebt werden, bewirkt die hochgradige Parallelität eine sehr hohe Steifigkeit, die durch weiche Federn sehr feinfühlig und mit dennoch sehr hoher dynamischer Positionsstabilität ausgestattet ist.

### Ausführungsbeispiele

**Ausbildungsformen** des Rotationslagers nach der Erfindung werden zu deren weiterem Verständnis nachfolgend anhand der schematischen Figuren näher erläutert. Dabei zeigt:
- **Figur 1**: eine Seitenansicht des Rotationslagers mit einem zentralem Antrieb,
- **Figur 2**: eine perspektivische Ansicht des runden Lagerkorbes gemäß Figur 1,
- **Figur 3**: eine perspektivische Ansicht des Rotationslagers mit einem Antrieb über drei Ausleger
- **Figur 4**: mehrere rechteckige Lagerkörbe in Parallelschaltung und
- **Figur 5**: einen optischen Strahlengang mit zwei Rotationslagern mit rechteckigem Lagerkorb.

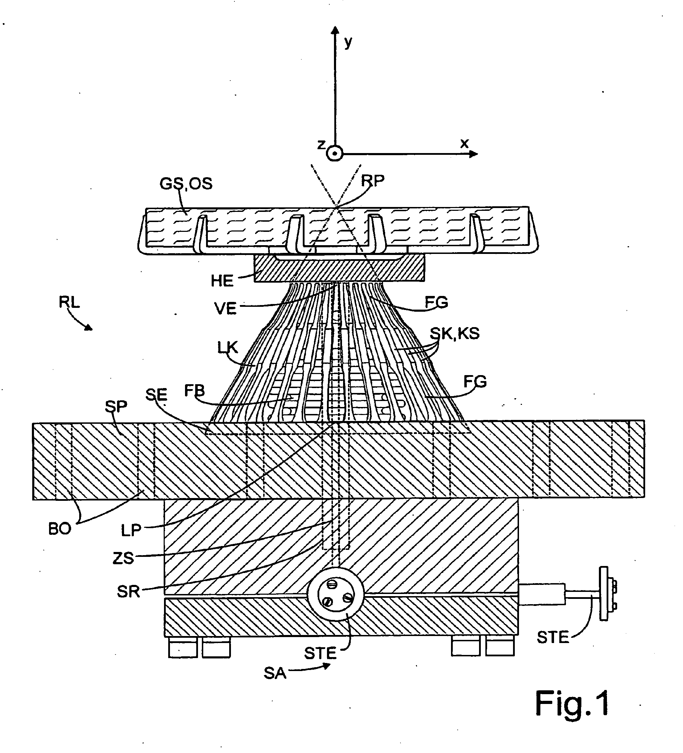

Die **Figur 1** zeigt ein Rotationslager **RL** zur hochgenau einstellbaren Winkelpositionierung eines Gegenstandes **GS,** im Ausführungsbeispiel eines optischen Spiegels **OS.** Dieser kann durch das Rotationslager **RL** um alle drei kartesischen Achsen **x, y** und **z** mit Winkelverstellungen im µrad oder nrad - Bereich gedreht werden. Dabei werden die beiden Rotationen um die **x-** und die z-Achse als "Kippung" und die Rotation um die **y**-Achse als Azimutaldrehung bezeichnet. Zentrales Element des Rotationslagers **RL** ist ein Lagerkorb **LK,** der nach der Art eines Federballs ausgebildet ist. An seinem unteren Rand weist der Lagerkorb **LK** ein ortsfestes Sockelelement **SE** auf, das im gezeigten Ausführungsbeispiel als eine runde Stahlplatte **SP** ausgebildet ist. Diese weist an ihrem Rand umlaufend mehrere Bohrungen **BO** zur weiteren Befestigung auf. An seinem oberen Rand weist der Lagerkorb **LK** ein Halteelement **HE** auf, das der Lagerung des Spiegels **OS** dient. Im gezeigten Ausführungsbeispiel ist das Halteelement dazu mit einer Haltekrone **HK** verbunden, die den Spiegel OS gleichmäßig aufnimmt.

Der Lagerkorb **LK** weist in seinem Mittelteil eine Vielzahl von dicht an seinem Umfang benachbarten schrägen Stützkoppeln **SK** auf, die als speichenartige Korbstreben **KS** ausgebildet sind. Dabei schneiden sich die Wirkungslinien aller Korbstreben **KS** im ortsfesten Reflexionspol **RP** des Spiegels **OS** (= Rotationspol **RP** bei einem nicht spiegelnden Gegenstand **GS),** sodass dieser nur Rotations- und keine Translationsbewegungen ausführt. Der Schnittpunkt ist der Ursprung eines kartesischen Bewegungskoordinatensystems. Der Lagerkorb **LK** ist einstückig ausgeführt. Das Halteelement **HE,** die Korbstreben **KS** und das Sockelelement **SE** sind beispielsweise per Laser aus einem Metallblech herausgeschnitten worden. Am Übergang der Korbstreben KS zum Halteelement **HE** und zum Sockelelement **SE** sind Festkörpergelenke **FG** vorgesehen, die eine Deformation des Lagerkorbes **LK** zur Einstellung vorgegebener Winkelpositionen, die durch Rotationsbewegungen eingestellt werden, ermöglichen. Im gewählten Ausführungsbeispiel sind die Korbstreben **KS** stabartig ausgeführt und die Festkörpergelenke **FG** werden von entsprechenden Einschnürungen **ES** gebildet. Im Inneren des Lagerkorbs **LK** weist das Rotationslager **RL** einen Faltenbalg **FB** auf, der eine vertikale Drehung des Rotationslagers **RL** verhindert. Dieses soll also im gezeigten Ausführungsbeispiel nur Kippungen erlauben. Der Faltenbalg **FB** ist an seinem oberen Ende über Verbindungselemente **VE** fest mit dem Halteelement **HE** verbunden.

Unterhalb der Stahlplatte **SP** sind zwei Stellelemente **STE** zum Kippen des Spiegels **OS** um die **x-** und die **z-**Achse als Teil eines Stellantriebs **SA** dargestellt, die entsprechend auf den beiden Achsen liegen und an einem zentralen Stab **ZS** (in der **Figur 1** gestrichelt dargestellt) angreifen, der kongruent mit der Längsachse (y-Achse) des Lagerkorbes **LK** verläuft und mit der Unterseite des Halteelements **HE** fest verbunden ist (in der **Figur 1** gestrichelt dargestellt). Zur Übertragung der Auslenkbewegung von den beiden Stellelementen **STE** auf das Halteelement **HE** ist der zentrale Stab **ZS** in einem Lagerpunkt **LP** gelagert. Ein drittes Stellelement **STE** zur Herbeiführung von einer Azimutaldrehung des Spiegels OS ist im dargestellten Ausführungsbeispiel nicht vorgesehen, könnte aber einfach an einem entsprechenden Ausleger **AL** positioniert werden. Der zentrale Stab **ZS** ist mit einem Schutzrohr **SR** umgeben, sodass sich ein sehr kompaktes und gut handhabbares Rotationslager **RL** ergibt.

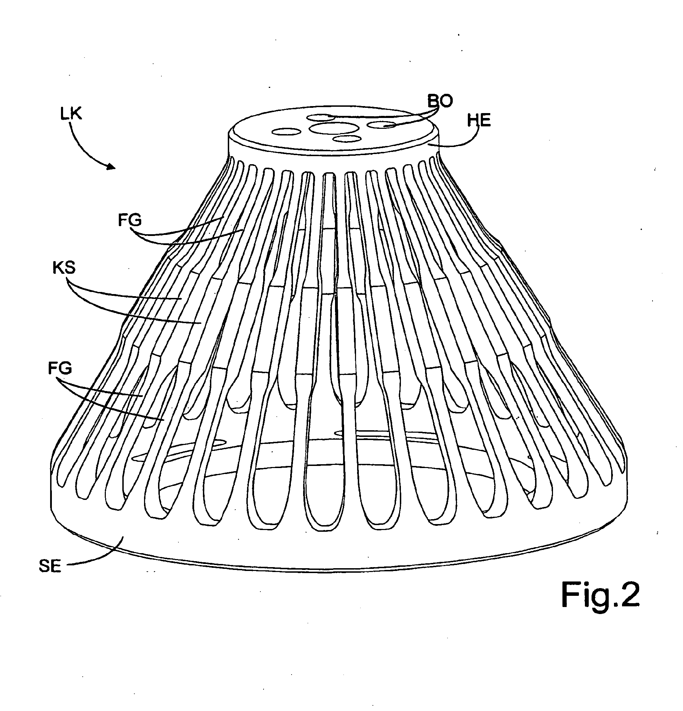

In der **Figur 2** ist der Lagerkorb **LK** gemäß **Figur 1** perspektivisch dargestellt. Neben dem Sockelelement **SE** und den Korbstreben **KS** mit den Festkörpergelenken **FG** ist das Halteelement **HE** zu erkennen. Im gewählten Ausführungsbeispiel handelt es sich hierbei um eine Platte mit Bohrungen **BO** zur direkten Befestigung des Gegenstandes **GS** oder zu indirekten Befestigung des Gegenstandes **GS** von weiteren Befestigungsmitteln. In der **Figur 2** ist der besonders kompakte Aufbau des Lagerkorbes **LK** gut zu erkennen. Dessen Steifigkeit ist sehr hoch, der Platzbedarf und die Masse sind sehr gering. Die Rotationsbewegungen erfolgen ohne Spiel, Reibung und Hysterese mit einer sehr hohen Reproduziergenauigkeit.

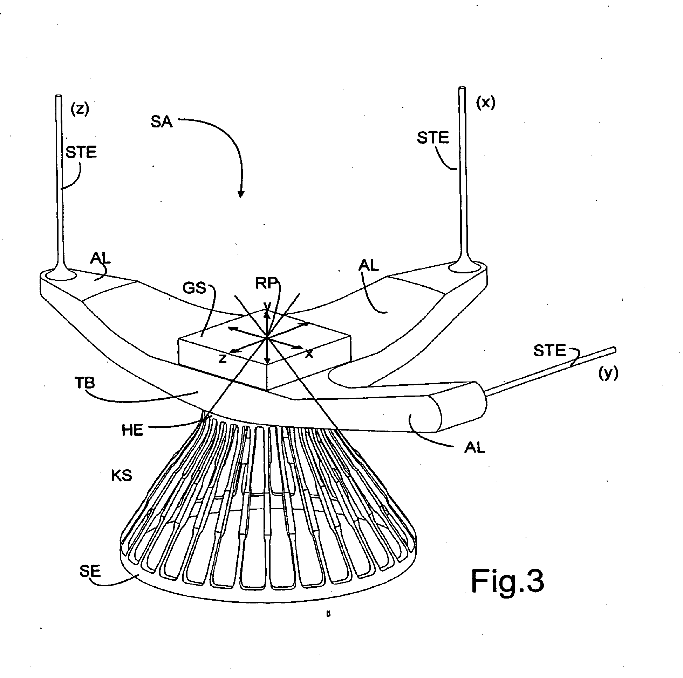

In der **Figur 1** ist ein Stellantrieb **SA** dargestellt, der zwei Stellelemente **SE** aufweist, die an einen zentralen Stab **ZS** angreifen. In der **Figur 3** hingegen ist ein Stellantrieb **SA** dargestellt, der mittels drei Auslegern **AL** realisiert ist. Im gewählten Ausführungsbeispiel sind die drei Ausleger **AL** einstückig in einem T-förmigen Bauteil **TB** vereint, das in seiner Mitte auf der Unterseite mit dem Halteelement **HE** fest verbunden ist und auf der Oberseite den zu verstellenden Gegenstand **GS** fest trägt. An jedem Ausleger **AL** greift jeweils ein Stellelement **STE** an. Dabei sind die Angriffsrichtungen so gewählt, dass jeweils eine Rotation in **x-, y-** und **z**-Richtung bewirkt wird. Gut zu erkennen in **Figur 3** ist der gemeinsame Schnittpunkt aller Korbstreben **KS** im Reflexionspol **RP** des Gegenstandes GS (= Rotationspol **RP** bei einem nicht spiegelnden Gegenstand **GS),** der somit beim Drehen nicht lateral oder transversal versetzt und dadurch beispielsweise aus einem optischen Strahlengang herausbewegt wird.

Eine Kippung in **x-**Richtung ergibt sich, wenn das in der **Figur 3** dargestellte mittlere Stellelement **STE** als axialer Antrieb vertikal bewegt wird, wobei die anderen beiden Stellelemente **STE** fixiert bleiben. Eine Kippung in **z-**Richtung ergibt sich durch die Verstellung des linken Stellelements **STE** als axialem Antrieb, das parallel zum mittleren Stellelement **STE** angeordnet ist, bei einer Fixierung der anderen beiden Stellelemente **STE.** Eine reine Drehung wird durch Verstellung des rechten Stellelements **STE** als axialem Antrieb, das orthogonal zu den beiden anderen Stellelementen **STE** angeordnet ist, bewirkt, während diese fixiert sind. Weiterhin ist durch eine gemeinsame Verstellung aller drei Stellelemente **STE** eine beliebige Kombinationen der Einzelbewegungen herbeiführbar, sodass jede Winkelposition des Gegenstandes **GS** im Raum hochgenau eingestellt werden kann.

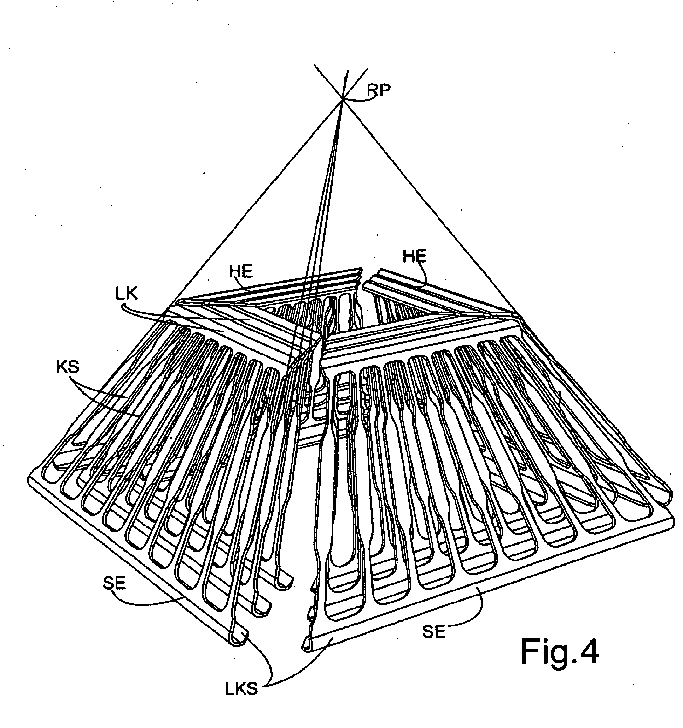

Die Form des Lagerkorbes **LK** ist frei wählbar und kann dem jeweiligen Anwendungsfall angepasst sein. In der **Figur 4** ist ein rechteckiger Lagerkorb **LK** dargestellt, bei dem jede Lagerkorbseite **LKS** einstückig aus beispielsweise einer sehr steifen Kunststoffplatte hergestellt ist. Die einzelnen Lagerkorbseiten **LKS** können, brauchen aber nicht miteinander verbunden sein. Im zweiten Fall müssen die Sockel- und Halteelemente **SE, HE** entsprechend mit weiteren Verbindungselementen (in der **Figur 4** nicht dargestellt) fest zusammengefügt werden. Eine hochgradig parallele Lösung besonders hoher Steifigkeit ergibt sich aus der Parallelschaltung mehrerer Lagerkörbe **LK,** wie in der **Figur 3** dargestellt. Dabei sind die einzelnen Lagerkörbe **LK** so angeordnet, dass nunmehr die Korbstreben **KS** aller Lagerkörbe **LK** auf den Reflexionspol **RP** (= Rotationspol **RP** bei einem nicht spiegelnden Gegenstand **GS)** ausgerichtet sind und sich deren Wirkungslinien dort schneiden. Die Korbstreben **KS** sollen nicht in einer gemeinsamen oder in parallelen Ebenen liegen.

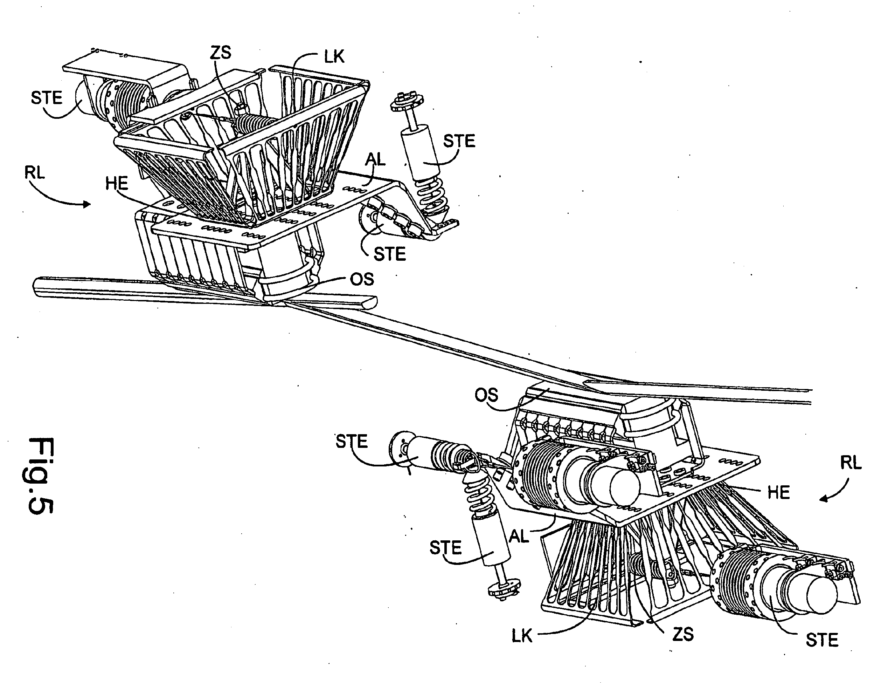

In der **Figur 5** schließlich ist eine Anordnung von zwei Rotationslagern **RL** in einem optischen Strahlengang dargestellt. Jedes Rotationslager **RL** weist einen rechteckigen Lagerkorb **LK** auf und trägt einen rechteckigen optischen Spiegel **OS.** An jedem Rotationslager **RL** können alle drei Rotationen über Stellelemente **STE** eingestellt werden. Dabei greifen je zwei Stellelemente **STE** an einem Ausleger **AL** und jeweils ein Stellelement **STE** an einem zentralen Stab **ZS** an. In der **Figur 5** ist zu erkennen, dass die Rotationslager **RL** sowohl mit dem Lagerkorb **LK** nach unten als auch nach oben ausgerichtet angeordnet werden können, da der Spiegel **OS** fest mit dem Halteelement **HE** verbunden ist.

### Bezugszeichenliste

- **AL**: Ausleger
- **BO**: Bohrung
- **ES**: Einschnürung
- **FB**: Faltenbalg
- **FG**: Festkörpergelenk
- **GS**: Gegenstand
- **HE**: Halteelement
- **HK**: Haltekrone
- **KS**: Korbstrebe
- **LK**: Lagerkorb
- **LKS**: Lagerkorbseite
- **LP**: Lagerpunkt
- **OS**: optischer Spiegel
- **RL**: Rotationslager
- **RP**: Reflexionspol (spiegelnd), Rotationspol
- **SA**: Stellantrieb
- **SE**: Sockelelement
- **SK**: Stützkoppel
- **SP**: Stahlplatte
- **SR**: Schutzrohr
- **STE**: Stellelement
- **TB**: T-förmiges Bauteil
- **VE**: Verbindungselement
- **x,y,z**: kartesische Achse
- **ZS**: zentraler Stab

## Patentansprüche

1. Rotationslager zur hochgenau einstellbaren Winkelposition eines Gegenstandes mit einem Halteelement zur Halterung des Gegenstandes und einem ortsfesten Sockelelement, das über mehrere am Umfang verteilte, jeweils an beiden Enden Festkörpergelenke als elastisch deformierbare Verformungszonen aufweisende schräge Stützkoppeln mit dem Halteelement fest verbunden ist, und mit einem Stellantrieb zur Einstellung der Winkelposition,
**dadurch gekennzeichnet, dass**
das Halteelement (HE), die Festkörpergelenke (FG), die als elastische Kugelgelenke für Meidional-, Sagittal- und Azimutaldrehunaen ausgebildet sind, die Stützkoppeln (SK) und das Sockelelement (SE) einen translatorisch steifen, gemeinsamen Lagerkorb (LK) mit der Möglichkeit, drei Rotationen um die kartesischen Achsen in einem Rotationspol (RP) zu erlauben, bilden, wobei die Stützkoppeln (SK) als speichenartige Korbstreben (KS) mit hoher axialer Steifigkeit ausgebindet und benachbart dreidimensional sternförmig angeordnet sind und sich die Wirkungslinien aller Korbstreben (KS) in dem ortsfesten Rotationspol (RP) des Gegenstandes (GS) schneiden.

2. Rotationslager nach Anspruch 1,
**dadurch gekennzeichnet, dass**
der Lagerkorb (LK) rund oder rechteckig ausgebildet ist, wobei auch Lücken zwischen den Korbstreben (KS) vorgesehen sein können.

3. Rotationslager nach Anspruch 1 oder 2,
**dadurch gekennzeichnet, dass**
der Lagerkorb (LK) aus einer Metalllegierung, einem Faserverbundmaterial oder einem Kunststoff besteht.

4. Rotationslager nach einem der Ansprüche 1 bis 3,
**dadurch gekennzeichnet, dass**
der Lagerkorb (LK) zumindest abschnittsweise einstückig aus einem Material ausgebildet ist und die Festkörpergelenke (FG) von Einschnürungen (ES) mit geringerer Biegefestigkeit gegenüber den Korbstreben (KS) in den Korbstreben (KS) gebildet sind.

5. Rotationslager nach einem der Ansprüche 1 bis 3,
**dadurch gekennzeichnet, dass**
die Korbstreben (KS) von Stahlseilen oder Spiralfedern gebildet sind, die jeweils als Festkörpergelenke (FG) mit dem Halteelement (HE) und dem Sockelelement (SE) verbunden sind und in ihrem mittleren Bereich eine starre Rohrhülse als Stützkoppel (SK) aufweisen.

6. Rotationslager nach einem der Ansprüche 1 bis 5,
**dadurch gekennzeichnet, dass**
zur Funktion des Stellantriebs (SA) zwei Stellelemente (STE) zum Kippen des Gegenstandes (GS) an einem zentralen Stab (ZA) angreifen, der kongruent mit der Längsachse des Lagerkorbes (LK) mit der Unterseite des Halteelements (HE) fest verbunden und in einem Lagerpunkt (LP) gelagert ist, und ein drittes Stellelement (STE) zur Drehung des Gegenstandes (GS) an einem mit dem Halteelement (HE) fest verbundenen Ausleger (AL) angreift.

7. Rotationslager nach Anspruch 6,
**dadurch gekennzeichnet, dass**
der zentrale Stab (ZS) über ein zum Rand des Halteelements (HE) aufspringendes Mehrfachbein mit dem Halteelement (HE) fest verbunden ist.

8. Rotationslager nach einem der Ansprüche 1 bis 5,
**dadurch gekennzeichnet, dass**
zu Funktion des Stellantriebs (SA) drei Stellelemente (STE) zum Kippen und Drehen des Gegenstandes (GS) an drei in einer Ebene jeweils einen rechten Winkel zueinander einschließenden und mit dem Halteelement (HE) fest verbundenen Auslegern (AL) in den kartesischen Richtungen (x,y,z) angreifen.

9. Rotationslager nach einem der Ansprüche 6 bis 8,
**dadurch gekennzeichnet, dass**
zwischen dem Stellelement (STE) und dem zentralen Stab (ZS) bzw. dem Ausleger (AL) eine in ihrer Steifigkeit wählbare Feder zur Weg-Kraft-Wandlung vorgesehen ist.

10. Rotationslager nach einem der Ansprüche 1 bis 9,
**dadurch gekennzeichnet, dass**
kongruent mit der Vertikalachse des Lagerkorbes (LK) in dessen Inneren ein Faltenbalg (FB) zur Vermeidung einer Azimutaldrehung des Lagerkorbes (LK) angeordnet ist und ein Stellelement (STE) zur Azimutaldrehung nicht vorgesehen ist.

11. Rotationslager nach einem der Ansprüche 1 bis 10,
**dadurch gekennzeichnet, dass**
mehrere gleich geformte Lagerkörbe (LK) übereinander, jedoch statisch parallel angeordnet sind, wobei sich Wirkungslinien aller Korbstreben (KS) im ortsfesten Rotationspol (RP) des Gegenstandes (GS) schneiden.

12. Rotationslager nach einem der Ansprüche 1 bis 11,
**dadurch gekennzeichnet, dass**
jede Korbstrebe (KS) weitere Festkörpergelenke aufweist.

## Claims

1. A rotational bearing for angular positioning, with high-precision adjustability, of an object comprising a holding element for holding the object and a stationary base element that is fixedly connected to the holding element by way of a plurality of inclined supporting couplers that are distributed over the periphery and have in each case at both ends solid-body joints as elastically deformable deformation zones, and having an actuating drive to adjust the angular position,
**characterised in that**
the holding element (HE), the solid-body joints (FG) which are formed as elastic ball joints for meridional, sagittal and azimuthal rotations, the supporting couplers (SK) and the base element (SE) form a translationally rigid, common bearing cage (LK) with the possibility of permitting three rotations about the cartesian axes at a rotational pole (RP), wherein the supporting couplers (SK) are formed as spoke-like cage struts (KS) with high axial rigidity and are arranged adjacently three-dimensionally in a star shape and the lines of action of all the cage struts (KS) intersect at the stationary rotational pole (RP) of the object (GS).

2. A rotational bearing according to claim 1,
**characterised in that**
the bearing cage (LK) is formed so that it is round or rectangular, in which case gaps can also be provided between the cage struts (KS).

3. A rotational bearing according to claim 1 or 2,
**characterised in that**
the bearing cage (LK) consists of a metal alloy, a fibre-composite material or a plastics material.

4. A rotational bearing according to one of claims 1 to 3, **characterised in that**
the bearing cage (LK) is formed at least in sections in one piece from one material, and the solid-body joints (FG) are formed in the cage struts (KS) from constrictions (ES) with lower flexural strength than the cage struts (KS).

5. A rotational bearing according to one of claims 1 to 3, **characterised in that**
the cage struts (KS) are formed from steel cables or spiral springs which are each connected as solid-body joints (FG) to the holding element (HE) and the base element (SE), and in their central area have a rigid tube sleeve as a supporting coupler (SK).

6. A rotational bearing according to one of claims 1 to 5, **characterised in that**
for the functioning of the actuating drive (SA) two actuating elements (STE) for tilting the object (GS) act on a central bar (ZA - *sic)* which is fixedly connected to the underside of the holding element (HE) congruently with respect to the longitudinal axis of the bearing cage (LK) and is mounted at a bearing point (LP), and a third actuating element (STE) for rotating the object (GS) acts on an extension arm (AL) fixedly connected to the holding element (HE).

7. A rotational bearing according to claim 6,
**characterised in that**
the central bar (ZS) is fixedly connected to the holding element (HE) by way of a multiple leg that springs up to the edge of the holding element (HE).

8. A rotational bearing according to one of claims 1 to 5, **characterised in that**
for the functioning of the actuating drive (SA) three actuating elements (STE) for tilting and rotating the object (GS) act in the cartesian directions (x, y, z) on three extension arms (AL) which in a plane in each case enclose a right angle in relation to each other and are fixedly connected to the holding element (HE).

9. A rotational bearing according to one of claims 6 to 8, **characterised in that**
provided between the actuating element (STE) and the central bar (ZS) or the extension arm (AL) respectively there is a spring with selectable rigidity for path-force conversion.

10. A rotational bearing according to one of claims 1 to 9, **characterised in that**
arranged congruently with respect to the vertical axis of the bearing cage (LK) in its interior there is a bellows (FB) for the avoidance of an azimuthal rotation of the bearing cage (LK), and an actuating element (STE) for azimuthal rotation is not provided.

11. A rotational bearing according to one of claims 1 to 10, **characterised in that**
a plurality of identically formed bearing cages (LK) are arranged one on top of the other, yet so that they are statically parallel, with lines of action of all the cage struts (KS) intersecting at the stationary rotational pole (RP) of the object (GS).

12. A rotational bearing according to one of claims 1 to 11, **characterised in that** each cage strut (KS) has further solid-body joints.

## Revendications

1. Support de rotation pour le réglage de haute précision de la position angulaire d'un objet relié solidairement à un élément de fixation de l'objet et un élément de socle fixe, relié solidairement à l'élément de support par plusieurs biellettes d'appui, inclinées, réparties à la périphérie, ayant à chacune des deux extrémités, des articulations par la matière sous la forme de zones de déformation élastique, ainsi qu'un actionneur pour régler la position angulaire,
**caractérisé en ce que**
l'élément de fixation (HE), les articulations par la matière (FG) qui sont des articulations élastiques à rotule pour des rotations méridionales, sagittales et azimutales, les biellettes d'appui (SK) et l'élément de socle (SE) forment un panier de support (LK), commun permettant trois rotations autour des axes d'un repère cartésien selon un pôle de rotation (RP),
les biellettes d'appui (SK) sont des entretoises de panier (KS) en forme de rayons d'une rigidité axiale élevée et elles sont réparties de façon rapprochées en forme de poteau tridimensionnel, et les lignes d'action de toutes les entretoises de panier (KS) se coupent au pôle de rotation (RP) fixe de l'objet (GS).

2. Support de rotation selon la revendication 1,
**caractérisé en ce que**
le panier de support (LK) est de forme ronde ou rectangulaire et des intervalles sont prévus entre les entretoises de panier (KS).

3. Support de rotation selon la revendication 1 ou 2,
**caractérisé en ce que**
le panier de support (LK) est réalisé en un alliage métallique, en une matière composite renforcée par des fibres ou en une matière plastique.

4. Support de rotation selon l'une des revendications 1 à 3,
**caractérisé en ce que**
le panier de support (LK) est réalisé en une seule pièce, au moins par segment, dans un matériau et les articulations par la matière (FG) sont formées par des rétrécissements (ES) de moindre rigidité en flexion par rapport aux entretoises de panier (KS) auxquelles (KS) ils appartiennent.

5. Support de rotation selon l'une des revendications 1 à 3,
**caractérisé en ce que**
les entretoises de panier (KS) sont formées par des câbles d'acier ou des ressorts hélicoïdaux reliés respectivement comme articulation par la matière (FG) à l'élément de fixation (HE) et à l'élément de socle (SE) et dans leur zone médiane elles comportent un manchon tubulaire rigide comme biellette d'appui (SK).

6. Support de rotation selon l'une des revendications 1 à 5,
**caractérisé en ce que**
deux éléments d'actionnement (STE) assurent le fonctionnement de l'actionneur (SA) pour basculer l'objet (GS) en attaquant une barre centrale (ZS), congruente à l'action longitudinale du panier de support (LK), reliée solidairement à la face inférieure de l'élément de fixation (HE) et montée dans un point de support (LP), et
un troisième élément d'actionnement (STE) agit sur le bras (AL) solidaire de l'élément de fixation (HE) pour tourner l'objet (GS).

7. Support de fixation selon la revendication 6,
**caractérisé en ce que**
la barre centrale (ZS) est reliée solidairement à l'élément de fixation (HE) par une jambe multiple remontant jusqu'au bord de l'élément de fixation (HE).

8. Support de fixation selon l'une des revendications 1 à 5,
**caractérisé en ce que**
pour le fonctionnement de l'actionneur (SA), trois éléments d'actionnement (STE) basculent et tournent l'objet (GS) en agissant sur trois bras (AL) coplanaires reliés solidairement à l'élément de fixation (HE) et faisant entre eux un angle droit, et
ces éléments d'actionnement attaquent suivant les directions cartésiennes (x, y, z) les bras (AL) reliés solidairement à l'élément de fixation (HE).

9. Support de fixation selon l'une des revendications 6 à 8,
**caractérisé par**
un ressort dont la dureté est choisie pour la conversion course/force entre l'élément d'actionnement (STE) et la barre centrale (ZS) ou le bras (AL).

10. Support de fixation selon l'une des revendications 1 à 9,
**caractérisé en ce qu'**
un soufflet (FB) est installé de manière congruente avec l'axe vertical du panier de support (LK) à l'intérieur de celui-ci pour éviter une rotation azimutale du panier de support (LK) et il n'est prévu aucun élément d'actionnement (STE) pour la rotation azimutale.

11. Support de fixation selon l'une des revendications 1 à 10,
**caractérisé en ce que**
plusieurs paniers de support (LK) de forme analogue sont installés de manière superposée mais statiquement parallèles, et les lignes d'action de toutes les entretoises de panier (KS) se coupent au pôle de rotation (RP), fixe de l'objet (GS).

12. Support de fixation selon l'une des revendications 1 à 11,
**caractérisé en ce que**
chaque entretoise de panier (KS) a d'autres articulations par la matière.
